# EUROPEAN PATENT SPECIFICATION

(11) **EP 1 603 411 B1**
(45) Date of publication and mention of the grant of the patent: **09.01.2008**
(21) Application number: 04709042.8
(22) Date of filing: 06.02.2004
(51) Int. Cl.: A23L 1/29, A23L 1/304, A23L 1/305, A23L 1/015, A23L 1/217, A23L 3/358, A21D 2/02, A21D 2/06, A21D 8/02

(54) **METHOD FOR REDUCING ACRYLAMIDE FORMATION IN THERMALLY PROCESSED FOODS**
VERFAHREN ZUR REDUZIERUNG VON ACRYLAMIDBILDUNG IN THERMISCH VERARBEITETEN LEBENSMITTELN
PROCEDE DE REDUCTION DE LA FORMATION D'ACRYLAMIDE DANS DES ALIMENTS SOUMIS A LA TRANSFORMATION THERMIQUE

(30) Priority: 21.02.2003 US 372154
(43) Date of publication of application: 14.12.2005
(60) Divisional application: 07075309.0
(73) Proprietor: Frito-Lay North America, Inc., formerly known as Recot, Inc., Plano, TX 75266 (US)
(72) Inventor: ELDER, Vincent, Allen, Carrollton, TX 75007 (US); FULCHER, John, Gregory, Dallas, TX 75220 (US); LEUNG, Henry, Kin-Hang, Plano, TX 75093 (US); TOPOR, Michael, Grant, Little Elm, TX 75068 (US)
(74) Representative: Jenkins, Peter David
(86) International application number: PCT/US2004/003448
(87) International publication number: WO 2004/075657

(56) References cited:
- EP-A- 1 419 703
- GB-A- 335 214
- US-A- 2 448 152
- US-A- 4 272 554
- US-A- 5 514 387
- US-A- 5 620 727
- US-A1- 2002 015 759
- US-A1- 2004 126 469
- US-B1- 6 210 720

## Description

### BACKGROUND OF THE INVENTION

### Technical Field

The present invention relates to a method for reducing the amount of acrylamide in thermally processed foods. This invention permits the production of foods having significantly reduced levels of acrylamide. The method relies on the addition of a divalent or trivalent cation, such as are found in the salts of calcium, magnesium, copper, iron, zinc, or aluminum to the dough formulation of a food.

### Description of Related Art

The chemical acrylamide has long been used in its polymer form in industrial applications for water treatment, enhanced oil recovery, papermaking, flocculants, thickeners, ore processing and permanent press fabrics. Acrylamide participates as a white crystalline solid, is odorless, and is highly soluble in water (2155 g/L at 30°C). Synonyms for acrylamide include 2-propenamide, ethylene carboxamide, acrylic acid amide, vinyl amide, and propenoic acid amide. Acrylamide has a molecular mass of 71.08, a melting point of 84.5°C, and a boiling point of 125°C at 25 mmHg.

In very recent times, a wide variety of foods have tested positive for the presence of acrylamide monomer. Acrylamide has especially been found primarily in carbohydrate food products that have been heated or processed at high temperatures. Examples of foods that have tested positive for acrylamide include coffee, cereals, cookies, potato chips, crackers, french-fried potatoes, breads and rolls, and fried breaded meats. In general, relatively low contents of acrylamide have been found in heated protein-rich foods, while relatively high contents of acrylamide have been found in carbohydrate-rich foods, compared to non-detectable levels in unheated and boiled foods. Reported levels of acrylamide found in various similarly processed foods include a range of 330 - 2,300 (µg/kg) in potato chips, a range of 300 - 1100 (µg/kg) in french fries, a range 120 - 180 (µg/kg) in com chips, and levels ranging from not detectable up to 1400 (µg/kg) in various breakfast cereals.

It is presently believed that acrylamide is formed from the presence of amino acids and reducing sugars. For example, it is believed that a reaction between free asparagine, an amino acid commonly found in raw vegetables, and free reducing sugars accounts for the majority of acrylamide found in fried food products. Asparagine accounts for approximately 40% of the total free amino acids found in raw potatoes, approximately 18% of the total free amino acids found in high protein rye, and approximately 14% of the total free amino acids found in wheat.

The formation of acrylamide from amino acids other than asparagine is possible, but it has not yet been confirmed to any degree of certainty. For example, some acrylamide formation has been reported from testing glutamine, methionine, cysteine, and aspartic acid as precursors. These findings are difficult to confirm, however, due to potential asparagine impurities in stock amino acids. Nonetheless, asparagine has been identified as the amino acid precursor most responsible for the formation of acrylamide.

Since acrylamide in foods is a recently discovered phenomenon, its exact mechanism of formation has not been confirmed. However, it is now believed that the most likely route for acrylamide formation involves a Maillard reaction. The Maillard reaction has long been recognized in food chemistry as one of the most important chemical reactions in food processing and can affect flavor, color, and the nutritional value of the food. The Maillard reaction requires heat, moisture, reducing sugars, and amino acids.

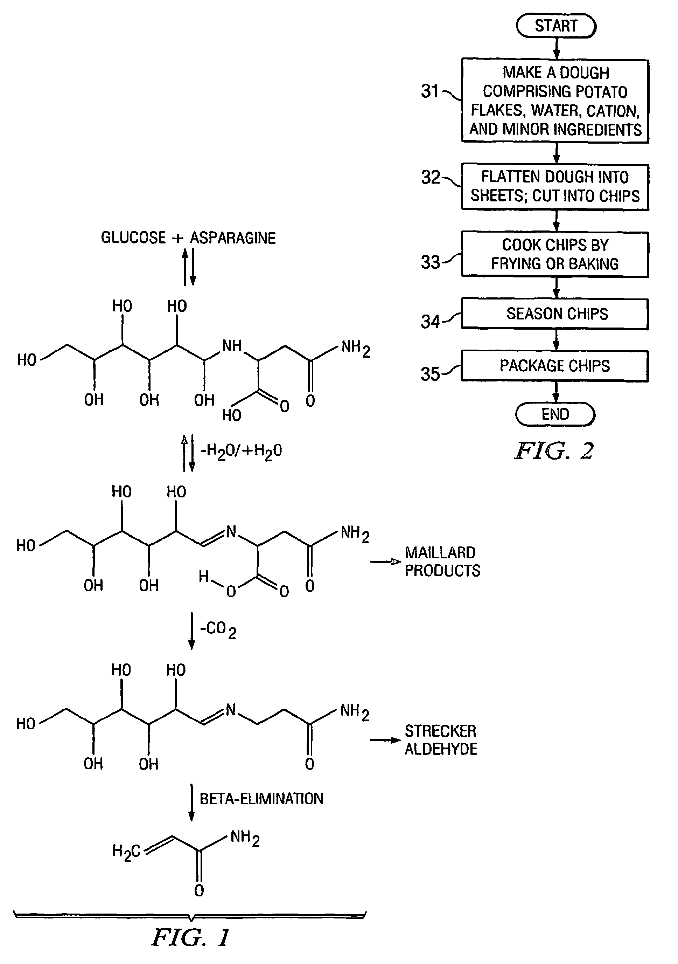

The Maillard reaction involves a series of complex reactions with numerous intermediates, but can be generally described as involving three steps. The first step of the Maillard reaction involves the combination of a free amino group (from free amino acids and/or proteins) with a reducing sugar (such as glucose) to form Amadori or Heyns rearrangement products. The second step involves degradation of the Amadori or Heyns rearrangement products via different alternative routes involving deoxyosones, fission, or Strecker degradation. A complex series of reactions - including dehydration, elimination, cyclization, fission, and fragmentation - results in a pool of flavor intermediates and flavor compounds. The third step of the Maillard reaction is characterized by the formation of brown nitrogenous polymers and co-polymers. Using the Maillard reaction as the likely route for the formation of acrylamide, Figure 1 illustrates a simplification of suspected pathways for the formation of acrylamide starting with asparagine and glucose.

Acrylamide has not been determined to be detrimental to humans, but its presence in food products, especially at elevated levels, is undesirable. As noted previously, relatively higher concentrations of acrylamide are found in food products that have been heated or thermally processed. The reduction of acrylamide in such food products could be accomplished by reducing or eliminating the precursor compounds that form acrylamide, inhibiting the formation of acrylamide during the processing of the food, breaking down or reacting the acylamide monomer once formed in the food, or removing acrylamide from the product prior to consumption. Understandably, each food product presents unique challenges for accomplishing any of the above options. For example, foods that are sliced and cooked as coherent pieces may not be readily mixed with various additives without physically destroying the cell structures that give the food products their unique characteristics upon cooking. Other processing requirements for specific food products may likewise make acrylamide reduction strategies incompatible or extremely difficult.

By way of an example of heated food products that represent unique challenges to reducing acrylamide levels in the final products, snacks can be fabricated from a dough. The term "fabricated snack" means a snack food that uses as its starting ingredient something other than the original and unaltered starchy starting material. For example, fabricated snacks include fabricated potato chips that use a dehydrated potato product as a starting material and corn chips that use a masa flour as its starting material. It is noted here that the dehydrated potato product can be potato flour, potato flakes, potato granules, or any other form in which dehydrated potatoes exist. When any of these terms are used in this application, it is understood that all of these variations are included. Fabricated potato chips start with, for example, potato flakes, which are mixed with water and other minor ingredients to form a dough. This dough is then sheeted and cut before proceeding to a cooking step. The cooking step may involve frying or baking. The chips then proceed to a seasoning step and a packaging step. The mixing of the potato dough generally lends itself to the easy addition of other ingredients. Conversely, the addition of such ingredients to a raw food product, such as potato slices, requires that a mechanism be found to allow for the penetration of ingredients into the cellular structure of the product. However, the addition of any ingredients in the mixing step must be done with the consideration that the ingredients may adversely affect the sheeting characteristics of the dough as well as the final chip characteristics, such as flavor, texture, and color.

It would be desirable to develop one or more methods of reducing the level of acrylamide in the end product of heated or thermally processed foods. Ideally, such a process should substantially reduce or eliminate the acrylamide in the end product without adversely affecting the quality and characteristics of the end product. Further, the method should be easy to implement and, preferably, add little or no cost to the overall process.

### SUMMARY OF THE INVENTION

The present invention provides a method of lowering the level of acrylamide produced by the thermal processing of a chip manufactured from a dough comprising a material having free asparagine, said method comprising the steps of:
a) adding a cation, having a valence of at least two, to said dough; and
b) thermally processing said dough to produce a chip;
wherein said cation is added in an amount sufficient to reduce the final level of acrylamide in said chip to a level that is lower than if the cation had not been added at step a), and wherein the material is selected from a starch-based material, the chip being a potato chip, or a corn chip.

In the inventive process, a divalent or trivalent cation or combination of such cations is added to fabricated foods prior to cooking to reduce the formation of acrylamide. The divalent or trivalent cation can be added during milling, dry mix, wet mix, or other admix, so that the cation is present throughout the food product. In preferred embodiments, the added cation can be chosen from the group of calcium, magnesium, and aluminum salts, and less favorably, iron, zinc, and copper salts. The cation is added to the dough in an amount sufficient to reduce the acrylamide formation in the finished product to a desired level.

The addition of divalent or trivalent cations effectively reduces the amount of acrylamide found in the end product of the heated or thermally processed food while minimally affecting the quality and characteristics of the end product. Further, such a method of acrylamide reduction is generally easy to implement and adds little or no cost to the overall process.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
Figure 1 is a schematic of suspected chemical pathways for acrylamide formation in foods; and
Figure 2 is a schematic of a method for making fabricated potato chips from potato flakes, granules, or flour according to an embodiment of the present invention.

### DETAILED DESCRIPTION

The formation of acrylamide in thermally processed foods requires a source of carbon and a source of nitrogen. It is hypothesized that carbon is provided by a carbohydrate source and nitrogen is provided by a protein source or amino acid source. Many plant-derived food ingredients such as rice, wheat, corn, barley, soy, potato and oats contain asparagine and are primarily carbohydrates having minor amino acid components. Typically, such food ingredients have a small amino acid pool, which contains other amino acids in addition to asparagine.

By "thermally processed" is meant food or food ingredients wherein components of the food, such as a mixture of food ingredients, are heated at temperatures of at least 80°C. Preferably the thermal processing of the food or food ingredients takes place at temperatures between about 100°C and 205°C. The food ingredient may be separately processed at elevated temperature prior to the formation of the final food product. An example of a thermally processed food ingredient is potato flakes, which is formed from raw potatoes in a process that exposes the potato to temperatures as high as 170°C. (The terms "potato flakes", "potato granules", and "potato flour" are used interchangeably herein, and are meant to denote any potato based, dehydrated product.) Examples of other thermally processed food ingredients include processed oats, par-boiled and dried rice, cooked soy products, corn masa, roasted coffee beans and roasted cacao beans. Alternatively, raw food ingredients can be used in the preparation of the final food product wherein the production of the final food product includes a thermal heating step. One example of raw material processing wherein the final food product results from a thermal heating step is the manufacture of potato chips from raw potato slices by the step of frying at a temperature of from about 100°C to about 205°C or the production of french fries fried at similar temperatures.

In accordance with the present invention, however, a significant formation of acrylamide has been found to occur when the amino acid asparagine is heated in the presence of a reducing sugar. Heating other amino acids such as lysine and alanine in the presence of a reducing sugar such as glucose does not lead to the formation of acrylamide. Surprisingly, the addition of other amino acids to the asparagine sugar mixture can increase or decrease the amount of acrylamide formed.

Having established the rapid formation of acrylamide when asparagine is heated in the presence of a reducing sugar, a reduction of acrylamide in thermally processed foods can be achieved by inactivating the asparagine. By "inactivating" is meant removing asparagine from the food or rendering asparagine non-reactive along the acrylamide formation route by means of conversion or binding to another chemical that interferes with the formation of acrylamide from asparagine.

In the present invention, this is accomplished by the addition of a divalent or trivalent cation to a formula for a snack food prior to the cooking or thermal processing of that snack food. Chemists will understand that cations do not exist in isolation, but are found in the presence of an anion having the same valence. Although reference is made herein to the salt containing the divalent or trivalent cation, it is the cation present in the salt that is believed to provide a reduction in acrylamide formation by reducing the solubility of asparagine in water. These cations are also referred to herein as a cation with a valence of at least two. Interestingly, cations of a single valence are not effective in use with the present invention. In choosing an appropriate compound containing the cation having a valence of at least two in combination with an anion, the relevant factors are water solubility, food safety, and least alteration to the characteristics of the particular food. Combinations of various salts can be used, even though they are discussed herein only as individuals salts.

Chemists speak of the valence of an atom as a measure of its ability to combine with other elements. Specifically, a divalent atom has the ability to form two ionic bonds with other atoms, while a trivalent atom can form three ionic bonds with other atoms. A cation is a positively charged ion, that is, an atom that has lost one or more electrons, giving it a positive charge. A divalent or trivalent cation, then, is a positively charged ion that has availability for two or three ionic bonds, respectively.

Simple model systems can be used to test the effects of divalent or trivalent cations on acrylamide formation. Heating asparagine and glucose in 1:1 mole proportions can generate acrylamide. Quantitative comparisons of acrylamide content with and without an added salt measures the ability of the salt to promote or inhibit acrylamide formation. Two sample preparation and heating methods were used. One method involved mixing the dry components, adding an equal amount of water, and heating in a loosely capped vial. Reagents concentrated during heating as most of the water escaped, duplicating cooking conditions. Thick syrups or tars can be produced, complicating recovery of acrylamide. These tests are shown in Examples 1 and 2 below.

A second method using pressure vessels allowed more controlled experiments. Solutions of the test components were combined and heated under pressure. The test components can be added at the concentrations found in foods, and buffers can duplicate the pH of common foods. In these tests, no water escapes, simplifying recovery of acrylamide, as shown in Example 3 below.

### Example 1

A 20 mL (milliliter) glass vial containing L-asparagine monohydrate (0.15 g, 1 mmole), glucose (0.2 g, 1 mmole) and water (0.4 mL) was covered with aluminum foil and heated in a gas chromatography (GC) oven programmed to heat from 40° to 220°C at 20°/minute, hold two minutes at 220°C, and cool from 220° to 40°C at 20°/min. The residue was extracted with water and analyzed for acrylamide using gas chromatography-mass spectroscopy (GC-MS). Analysis found approximately 10,000 ppb (parts/billion) acrylamide. Two additional vials containing L-asparagine monohydrate (0.13 g, 1 mmole), glucose (0.2 g, 1 mmole), anhydrous calcium chloride (0.1 g, 1 mmole) and water (0.4 mL) were heated and analyzed. Analysis found 7 and 30 ppb acrylamide, a greater than ninety-nine percent reduction.

Given the surprising result that calcium salts strongly reduced acrylamide formation, further screening of salts identified divalent and trivalent cations (magnesium, aluminum) as producing a similar effect. It is noted that similar experiments with monovalent cations, i.e. 0.1/0.2 g sodium bicarbonate and ammonium carbonate (as ammonium carbamate and ammonium bicarbonate) increased acrylamide formation, as seen in **Table 1** below.

| Salt | Micro Mole Salt | Micromole Acrylamide after heating, ppb |
|---|---|---|
| None (control) | 0 | 9857 |
| Sodium bicarbonate | 1200 | 13419 |
| Ammonium carbonate | 1250 | 22027 |
| Ammonium carbonate | 2500 | 47897 |

### Table 1

### Example 2

In a second experiment, a similar test to that described above was performed, but instead of using anhydrous calcium chloride, two different dilutions of each of calcium chloride and magnesium chloride were used. Vials containing L-asparagine monohydrate (0.15 g, 1 mmole) and glucose (0.2 g, 1 mmole) were mixed with one of the following:
0.5 mL water (control),
0.5 mL 10% calcium chloride solution (0.5 mmole),
0.05 mL 10% calcium chloride solution (0.05 mmole) plus 0.45 mL water,
0.5 mL 10% magnesium chloride solution (0.5 mmole), or
0.05 mL 10% magnesium chloride solution (0.05 mmole) plus 0.45 mL water.

Duplicate samples were heated and analyzed as described in Example 1. Results were averaged and summarized in **Table 2** below:

**Table 2**

| Salt ID | Amt added Micromoles | Acrylamide formed Micromoles | Acrylamide reduction |
|---|---|---|---|
| None (control) | 0 | 408 | 0 |
| Calcium chloride | 450 | 293 | 27% |
| Calcium chloride | 45 | 864 | None |
| Magnesium chloride | 495 | 191 | 53% |
| Magnesium chloride | 50 | 2225 | None |

### Example 3

As mentioned above, this test did not involve the loss of water from the container, but was done under pressure. Vials containing 2 mL of buffered stock solution (15 mM asparagine, 15 mM glucose, 500 mM phosphate or acetate) and 0.1 mL salt solution (1000 mM) were heated in a Parr bomb placed in a GC oven programmed to heat from 40 to 150°C at 20°/min and hold at 150°C for 2 minutes. The bomb was removed from the oven and cooled for 10 minutes. The contents were extracted with water and analyzed for acrylamide following the GC-MS method. For each combination of pH and buffer, a control was run without an added salt, as well as with the three different salts. Results of duplicate tests were averaged and summarized in Table 3 below:

**Table 3**

| **Salt** | **pH** | **Buffer** | **Mcg Acrylamide Salt added** | **Mcg Acrylamide Control** | **Acrylamide Reduction** |
|---|---|---|---|---|---|
| Calcium chloride | 5.5 | Acetate | 337 | 550 | 19% |
| Calcium chloride | 7.0 | Acetate | 990 | 1205 | 18% |
| Calcium chloride | 5.5 | Phosphate | 154 | 300 | 49% |
| Calcium chloride | 7.0 | Phosphate | 762 | 855 | 11% |
| Magnesium chloride | 5.5 | Acetate | 380 | 550 | 16% |
| Magnesium chloride | 7.0 | Acetate | 830 | 1205 | 31% |
| Magnesium chloride | 5.5 | Phosphate | 198 | 300 | 34% |
| Magnesium chloride | 7.0 | Phosphate | 773 | 855 | 10% |
| Potassium aluminum sulfate | 5.5 | Acetate | 205 | 550 | 31 % |
| Potassium aluminum sulfate | 7.0 | Acetate | 453 | 1205 | 62% |
| Potassium aluminum sulfate | 5.5 | Phosphate | 64 | 300 | 79% |
| Potassium aluminum sulfate | 7.0 | Phosphate | 787 | 855 | 8% |

Across the three salts used, the greatest reductions occurred in pH 7 acetate and pH 5.5 phosphate. Only small reductions were found in pH 5.5 acetate and pH 7 phosphate.

### Example 4

Following the model systems results, a small-scale laboratory test was run in which calcium chloride was added to potato flakes before heating. Three ml of a 0.4%, 2%, or 10% calcium chloride solution was added to 3 g of potato flakes. The control was 3 g of potato flakes mixed with 3 ml of de-ionized water. The flakes were mixed to form a relatively uniform paste and then heated in a sealed glass vial at 120° C for 40 min. Acrylamide after heating was measured by GC-MS. Before heating, the control potato flakes contained 46 ppb of acrylamide. Test results are reflected in Table 4 below.

**Table 4**

| **Mixture ID** | **Acrylamide, ppb** | **Acrylamide Reduction** |
|---|---|---|
| Control (water) | 2604 | None |
| CaCl₂ 0.4% solution | 1877 | 28% |
| CaCl₂ 2% solution | 338 | 76% |
| CaCl₂ 10% solution | 86 | 97% |

Given the results from above, tests were conducted in which a calcium salt was added to the formula for a fabricated snack food, in this case baked fabricated potato chips. The process for making baked fabricated potato chips consists of the steps shown in **Figure 3.** The dough preparation step **31** combines potato flakes with water, the cation/anion pair (which in this case is calcium chloride) and other minor ingredients, which are thoroughly mixed to form a dough. (Again, the term "potato flakes" is intended herein to encompass all dried potato flake, granule, or powder preparations, regardless of particle size.) In the sheeting/cutting step **32,** the dough is run through a sheeter, which flattens the dough, and then is cut into individual pieces. In the cooking step **33,** the formed pieces are cooked to a specified color and water content. The resultant chips are then seasoned in seasoning step **34** and packaged in packaging step **35.**

A first embodiment of the invention is demonstrated using the baked, fabricated potato chip process described above. To illustrate this embodiment, a comparison is made between a control and a test batch using a commercial baked, fabricated potato chip dough formulation and processes. Both test and control batches were made according to the formulations listed in **Table 5**. The only difference between the batches was that the test batch contained calcium chloride.

**Table 5**

| **Ingredient** | **Control** | **CaCl₂ Test** |
|---|---|---|
| Potato flakes and modified starch | 5496 g | 5496 g |
| Sugar | 300 g | 300 g |
| Oil | 90 g | 90 g |
| Leavening agents | 54 g | 54 g |
| Emulsifier | 60 g | 60 g |
| Calcium Chloride (dissolved in water) | 0 g | 39 g |
| Total Dry Mix | 6000 g | 6039 g |
| Water | 3947 ml | 3947 ml |

In all batches, the dry ingredients were first mixed together, then oil was added to each dry blend and mixed. The calcium chloride was dissolved in the water prior to adding to the dough. The moisture level of the dough prior to sheeting was 40% to 45% by weight. The dough was sheeted to produce a thickness of between 0.020 and 0.030 inches, cut into chip-sized pieces, and baked.

After cooking, testing was performed for moisture, oil, and color according to the Hunter L-a-b scale. Samples were tested to obtain acrylamide levels in the finished product. **Table 6** below shows the results of these analyses.

**Table 6**

| | | **Control** | **CaCl₂ Test** |
|---|---|---|---|
| **H2O, %** | | 2.21 | 2.58 |
| **Oil**, % | | 1.99 | 2.08 |
| **Acrylamide, ppb** | | 1030 | 160 |
| **Color** | **L** | 72.34 | 76.67 |
| | **A** | 1.99 | -.67 |
| | **B** | 20.31 | 24.21 |

As these results show, the addition of calcium chloride to the dough in a ratio by weight of calcium chloride to potato flakes of roughly 1:125 significantly lowers the level of acrylamide present in the finished product, lowering the final acrylamide levels from 1030 ppb to 160 ppb. Additionally, the percentages of oil and water in the final product do not appear to have been affected by the addition of calcium chloride. It is noted, however, that CaCl₂ can cause changes in the taste, texture, and color of the product, depending on the amount used.

The level of divalent or trivalent cation that is added to a food for the reduction of acrylamide can be expressed in a number of ways. In order to be commercially acceptable, the amount of cation added should be enough to reduce the final level of acrylamide production by at least twenty percent (20%). More preferably, the level of acrylamide production should be reduced by an amount in the range of thirty-five to ninety-five percent (35-95%). Even more preferably, the level of acrylamide production should be reduced by an amount in the range of fifty to ninety-five percent (50-95%). To express this in a different manner, the amount of divalent or trivalent cation to be added can be given as a ratio between the moles of cation to the moles of free asparagine present in the food product. The ratio of the moles of divalent or trivalent cation to moles of free asparagine should be at least one to five (1:5). More preferably, the ratio is at least one to three (1:3), and more preferably still, one to two (1:2). In the presently preferred embodiment, the ratio of moles of cations to moles of asparagine is between about 1:2 and 1:1. In the case of magnesium, which has less effect on the product taste than calcium, the molar ratio of cation to asparagine can be as high as about two to one (2:1).

Additional tests were run, using the same procedure as described above, but with different lots of potato flakes containing different levels of reducing sugars and varying amounts of calcium chloride added. In Table 7 below, lot 1 of potato flakes, which was the test shown above, had 0.81% reducing sugars, lot 2 had 1.0 % and lot 3 had 1.8% reducing sugars.

**Table 7**

| Added CaCl₂ | Flake Lot | Finished moisture weight % | Finished Color L Value | Finished Acrylamide ppb |
|---|---|---|---|---|
| 0 g | 1 | 2.21 | 72.34 | 1030 |
| 39 g | 1 | 2.58 | 76.67 | 160 |
| 0 g | 2 | 1.80 | 73.35 | 464 |
| 0 g | 2 | 1.61 | 72.12 | 1060 |
| 17.5 g | 2 | 1.82 | 74.63 | 350 |
| 39 g | 2 | 2.05 | 76.95 | 80 |
| 39 g | 2 | 1.98 | 75.86 | 192 |
| 0 g | 3 | 1.99 | 71.37 | 1020 |
| 0 g | 3 | 1.71 | 72.68 | 599 |
| 0 g | 3 | 1.69 | 71.26 | 1640 |
| 0 g | 3 | 1.63 | 74.44 | 1880 |
| 39 g | 3 | 1.89 | 76.59 | 148 |
| 39 g | 3 | 1.82 | 75.14 | 275 |

As seen in this table, the addition of CaCl₂ consistently reduces the level of acrylamide in the final product, even when the weight ratio of added CaCl₂ to potato flakes is lower than 1:250.

Any number of salts that form a divalent or trivalent cation (or said another way, produce a cation with a valence of at least two) can be used with the invention disclosed herein, as long as adjustments are made for the collateral effects of this additional ingredient. The effect of lowering the acrylamide level appears to derive from the divalent or trivalent cation, rather than from the anion that is paired with it. Limitations to the cation/anion pair, other than valence, are related to their acceptability in foods, such as safety, solubility, and their effect on taste, odor, appearance, and texture. Suggested cations include calcium, magnesium, aluminum, iron, copper, and zinc. Suitable salts of these cations include calcium chloride, calcium citrate, calcium lactate, calcium malate, calcium gluconate, calcium phosphate, calcium acetate, calcium sodium EDTA, calcium glycerophosphate, calcium hydroxide, calcium lactobionate, calcium oxide, calcium propionate, calcium carbonate, calcium stearoyl lactate, magnesium chloride, magnesium citrate, magnesium lactate, magnesium malate, magnesium gluconate, magnesium phosphate, magnesium hydroxide, magnesium carbonate, magnesium sulfate, aluminum chloride hexahydrate, aluminum chloride, aluminum hydroxide, ammonium alum, potassium alum, sodium alum, aluminum sulfate, ferric chloride, ferrous gluconate, ferric ammonium citrate, ferric pyrophosphate, ferrous fumarate, ferrous lactate, ferrous sulfate, cupric chloride, cupric gluconate, cupric sulfate, zinc gluconate, zinc oxide, and zinc sulfate. The presently preferred embodiment of this invention uses calcium chloride, although it is believed that the requirements may be best met by a combination of salts of one or more of the appropriate cations. A number of the salts, such as calcium salts, and in particular calcium chloride, are relatively inexpensive and commonly used as food. Calcium chloride can be used in combination with calcium citrate, thereby reducing the collateral taste effects of CaCl₂. Further, any number of calcium salts can be used in combination with one or more magnesium salts. One skilled in the art will understand that the specific formulation of salts required can be adjusted depending on the food product in question and the desired end-product characteristics.

It should be understood that changes in the characteristics of the final product, such as changes in color, taste, and consistency can be adjusted by various means. For example, color characteristics in potato chips can be adjusted by controlling the amount of sugars in the starting product. Some flavor characteristics can be changed by the addition of various flavoring agents to the end product. The physical texture of the product can be adjusted by, for example, the addition of leavening agents or various emulsifiers.

For example, while the process has been disclosed herein with regard to potato products, the process can also be used in processing of food products made from corn, barley, wheat, rye, rice, oats, millet, and other starch-based grains. In addition to fabricated potato chips, the invention can be used in making corn chips and other types of snack chips, as well as in cereals, cookies, crackers, hard pretzels, breads and rolls, the breading for breaded meats, and other foods containing asparagine and a reducing sugar. In each of these foods, the cation can be added during the mixing of the dough used to make the product, so that the added cation is available during cooking to provide a reduction in the level of acrylamide. Further, the addition of a divalent or trivalent cation can be combined with other strategies for the reduction of acrylamide to produce an acceptable acrylamide level without adversely affecting the taste, color, odor, or other characteristics of an individual food.

## Claims

1. A method of lowering the level of acrylamide produced by the thermal processing of a chip manufactured from a dough comprising a material having free asparagine, said method comprising the steps of :
a) adding a cation, having a valence of at least two, to said dough; and
b) thermally processing said dough to produce a chip;
wherein said cation is added in an amount sufficient to reduce the final level of acrylamide in said chip to a level that is lower than if the cation had not been added at step a), and wherein the material is selected from a starch-based material, the chip being a potato chip, or a corn chip.

2. The method of Claim 1, wherein said adding step a) adds an amount of said cation sufficient to reduce said final level of acrylamide in said chip by at least 20 percent.

3. The method of Claim 1, wherein said adding step a) adds an amount of said cation sufficient to reduce said final level of acrylamide in said chip by at least 35 percent.

4. The method of Claim 1, wherein said adding step a) adds an amount of said cation sufficient to reduce said final level of acrylamide in said chip by about 50 percent.

5. The method of Claim 1, wherein said adding step a) adds an amount of said cation sufficient to reduce said final level of acrylamide in said chip by a range of 50 to 95 percent.

6. The method of Claim 1, wherein said adding step a) adds a quantity of said cation sufficient to produce a molar ratio of cation to free asparagine of at least 1:5.

7. The method of Claim 1, wherein said adding step a) adds a quantity of said cation sufficient to produce a molar ratio of cation to free asparagine of at least 1:3.

8. The method of Claim 1, wherein said adding step a) adds a quantity of said cation sufficient to produce a molar ratio of cation to free asparagine of about 1:2.

9. The method of Claim 1, wherein said adding step a) adds a quantity of said cation sufficient to produce a molar ratio of cation to free asparagine of about 1:1.

10. The method of Claim 1, wherein said adding step a) adds a calcium ion to said dough, said calcium ion being part of a salt selected from the group of calcium chloride, calcium lactate, calcium citrate, calcium malate, calcium gluconate, calcium phosphate, calcium acetate, calcium sodium EDTA, calcium glycerophosphate, calcium hydroxide, calcium lactobionate, calcium oxide, calcium propionate, calcium carbonate, and calcium stearoyl lactate.

11. The method of Claim 1, wherein said adding step a) adds a magnesium ion to said dough, said magnesium ion being part of a salt selected from the group of magnesium chloride, magnesium citrate, magnesium lactate, magnesium malate, magnesium gluconate, magnesium phosphate, magnesium hydroxide, magnesium carbonate, and magnesium sulfate.

12. The method of Claim 1, wherein said adding step a) adds an aluminum ion to said dough, said ion being part of a salt selected from the group of aluminum chloride hexahydrate, aluminum chloride, aluminum hydroxide, ammonium alum, potassium alum, sodium alum, and aluminum sulfate.

13. The method of Claim 1, wherein said adding step a) adds an iron salt to said dough, said salt being selected from the group of ferric chloride, ferrous gluconate, ferric ammonium citrate, ferric pyrophosphate, ferrous fumarate, ferrous lactate, and ferrous sulfate.

14. The method of Claim 1, wherein said adding step a) adds a copper ion to said dough, said copper ion being part of a salt selected from the group of cupric chloride, cupric gluconate, and cupric sulfate.

15. The method of Claim 1, wherein said thermally processing step b) comprises frying said dough.

16. The method of Claim 1, wherein said thermally processing step b) comprises baking said dough.

17. The method of Claim 1, wherein the chip is a corn chip.

## Patentansprüche

1. Verfahren zur Reduzierung des bei der thermischen Verarbeitung eines aus einem freies Asparagin aufweisenden Teig hergestellten Chips produzierten Anteils an Acrylamid, wobei das Verfahren die Schritte umfasst:
a) Zugabe eines Kations, das mindestens die Wertigkeit von 2 aufweist, zum Teig; und
b) thermische Verarbeitung des Teigs um einen Chip herzustellen;
wobei das Kation in einer ausreichenden Menge zugegeben wird, um den Endgehalt an Acrylamid in dem Chip auf ein Niveau zu reduzieren, das geringer ist als wenn das Kation nicht im Schritt a) zugegeben worden wäre, und
wobei das Ausgangsmaterial ausgewählt ist aus einem auf Stärke basierenden Ausgangsmaterial, wobei der Chip ein Kartoffelchip oder ein Kornchip ist.

2. Verfahren nach Anspruch 1, wobei bei der Zugabe in Schritt a) eine Menge des Kations zugegeben wird, die ausreicht, um den Endgehalt an Acrylamid im Chip um mindestens 20 Prozent zu reduzieren.

3. Verfahren nach Anspruch 1, wobei bei der Zugabe in Schritt a) eine Menge des Kations zugegeben wird, die ausreicht, um den Endgehalt an Acrylamid im Chip um mindestens 35 Prozent zu reduzieren.

4. Verfahren nach Anspruch 1, wobei bei der Zugabe in Schritt a) eine Menge des Kations zugegeben wird, die ausreicht, um den Endgehalt an Acrylamid im Chip um mindestens 50 Prozent zu reduzieren.

5. Verfahren nach Anspruch 1, wobei bei der Zugabe in Schritt a) eine Menge des Kations zugegeben wird, die ausreicht, um den Endgehalt an Acrylamid im Chip um einen Bereich von 50 bis 90 Prozent zu reduzieren.

6. Verfahren nach Anspruch 1, wobei bei der Zugabe in Schritt a) eine Menge des Kations zugegeben wird, die ausreicht, um ein molares Verhältnis von Kation zu freiem Asparagin von mindestens 1 : 5 zu herzustellen.

7. Verfahren nach Anspruch 1, wobei bei der Zugabe in Schritt a) eine Menge des Kations zugegeben wird, die ausreicht, um ein molares Verhältnis von Kation zu freiem Asparagin von mindestens 1 : 3 zu herzustellen.

8. Verfahren nach Anspruch 1, wobei bei der Zugabe in Schritt a) eine Menge des Kations zugegeben wird, die ausreicht, um ein molares Verhältnis von Kation zu freiem Asparagin von etwa 1 : 2 zu herzustellen.

9. Verfahren nach Anspruch 1, wobei bei der Zugabe in Schritt a) eine Menge des Kations zugegeben wird, die ausreicht, um ein molares Verhältnis von Kation zu freiem Asparagin von etwa 1 : 1 zu herzustellen.

10. Verfahren nach Anspruch 1, wobei bei der Zugabe in Schritt a) ein Calciumion zu dem Teig gegeben wird, wobei das Calciumion Teil eines Salzes ist, ausgewählt aus der Gruppe Calciumchlorid, Calciumlactat, Calciumcitrat, Calciummalat, Calciumgluconat, Calciumphosphat, Calciumacetat, Calcium-Natrium-EDTA, Calciumglycerophosphat, Calciumhydroxid, Calciumlactobionat, Calciumpropionat, Calciumcarbonat und Calciumstearoyllactat.

11. Verfahren nach Anspruch 1, wobei bei der Zugabe in Schritt a) ein Magnesiumion zu dem Teig gegeben wird, wobei das Magnesiumion Teil eines Salzes ist, ausgewählt aus der Gruppe Magnesiumchlorid, Magnesiumcitrat, Magnesiumlactat, Magnesiummalat, Magnesiumgluconat, Magnesiumphosphat, Magnesiumhydroxid, Magnesiumcarbonat und Magnesiumsulfat.

12. Verfahren nach Anspruch 1, wobei bei der Zugabe in Schritt a) ein Aluminiumion zu dem Teig gegeben wird, wobei das Aluminiumion Teil eines Salzes ist, ausgewählt aus der Gruppe Aluminiumchlorid, Aluminiumhexahydrat, Aluminiumhydroxid, Ammoniumalaun, Kaliumalaun, Natriumalaun und Aluminiumsulfat.

13. Verfahren nach Anspruch 1, wobei bei der Zugabe in Schritt a) ein Eisensalz zu dem Teig gegeben wird, wobei das Eisensalz ausgewählt ist aus der Gruppe Eisenchlorid, Eisengluconat, Eisenammoniumcitrat, Eisenpyrophosphat, Eisenfumarat, Eisenlactat und Eisensulfat.

14. Verfahren nach Anspruch 1, wobei bei der Zugabe in Schritt a) ein Kupferion zu dem Teig gegeben wird, wobei das Kupferion Teil eines Salzes ist, ausgewählt aus der Gruppe Kupferchlorid, Kupfergluconat und Kupfersulfat.

15. Verfahren nach Anspruch 1, wobei der thermische Verfahrensschritt b) das Braten des Teigs umfasst.

16. Verfahren nach Anspruch 1, wobei der thermische Verfahrensschritt b) das Backen des Teigs umfasst.

17. Verfahren nach Anspruch 1, wobei der Chip ein Kornchip ist.

## Revendications

1. Méthode de réduction du niveau d'acrylamide produit par le traitement thermique d'une chips produite à partir d'une pâte comprenant un matériau ayant de l'asparagine libre, ladite méthode comprenant les étapes suivantes :
a) l'ajout d'un cation, ayant une valence d'au moins deux, à ladite pâte ; et
b) le traitement thermique de ladite pâte pour produire une chips ;
dans laquelle ledit cation est ajouté en une quantité suffisante pour réduire le niveau final d'acrylamide dans ladite chips à un niveau qui est inférieur au niveau obtenu si le cation n'est pas ajouté à l'étape a), et dans laquelle le matériau est choisi d'un matériau à base d'amidon, la chips étant une chips de pomme de terre, ou une chips de maïs.

2. Méthode selon la revendication 1, dans laquelle ladite étape d'ajout a) ajoute une quantité dudit cation suffisante pour réduire ledit niveau final d'acrylamide dans ladite chips d'au moins 20 %.

3. Méthode selon la revendication 1, dans laquelle ladite étape d'ajout a) ajoute une quantité dudit cation suffisante pour réduire ledit niveau final d'acrylamide dans ladite chips d'au moins 35 %.

4. Méthode selon la revendication 1, dans laquelle ladite étape d'ajout a) ajoute une quantité dudit cation suffisante pour réduire ledit niveau final d'acrylamide dans ladite chips d'environ 50 %.

5. Méthode selon la revendication 1, dans laquelle ladite étape d'ajout a) ajoute une quantité dudit cation suffisante pour réduire ledit niveau final d'acrylamide dans ladite chips d'une plage allant de 50 à 95 %.

6. Méthode selon la revendication 1, dans laquelle ladite étape d'ajout a) ajoute une quantité dudit cation suffisante pour produire un rapport molaire du cation à l'asparagine libre d'au moins 1:5.

7. Méthode selon la revendication 1, dans laquelle ladite étape d'ajout a) ajoute une quantité dudit cation suffisante pour produire un rapport molaire du cation à l'asparagine libre d'au moins 1:3.

8. Méthode selon la revendication 1, dans laquelle ladite étape d'ajout a) ajoute une quantité dudit cation suffisante pour produire un rapport molaire du cation à l'asparagine libre d'environ 1:2.

9. Méthode selon la revendication 1, dans laquelle ladite étape d'ajout a) ajoute une quantité dudit cation suffisante pour produire un rapport molaire du cation à l'asparagine libre d'environ 1:1.

10. Méthode selon la revendication 1, dans laquelle ladite étape d'ajout a) ajoute un ion calcium à ladite pâte, ledit ion calcium étant une partie d'un sel choisi dans le groupe comprenant le chlorure de calcium, le lactate de calcium, le citrate de calcium, le malate de calcium, le gluconate de calcium, le phosphate de calcium, l'acétate de calcium, l'EDTA de calcium disodique, le glycérophosphate de calcium, l'hydroxyde de calcium, le lactobionate de calcium, l'oxyde de calcium, le propionate de calcium, le carbonate de calcium et le stéaroyl lactate de calcium.

11. Méthode selon la revendication 1, dans laquelle ladite étape d'ajout a) ajoute un ion magnésium à ladite pâte, ledit ion magnésium étant une partie d'un sel choisi dans le groupe comprenant le chlorure de magnésium, le citrate de magnésium, le lactate de magnésium, le malate de magnésium, le gluconate de magnésium, le phosphate de magnésium, l'hydroxyde de magnésium, le carbonate de magnésium et le sulfate de magnésium.

12. Méthode selon la revendication 1, dans laquelle ladite étape d'ajout a) ajoute un ion aluminium à ladite pâte, ledit ion étant une partie d'un sel choisi dans le groupe comprenant l'hexahydrate de chlorure d'aluminium, le chlorure d'aluminium, l'hydroxyde d'aluminium, l'alun d'ammonium, l'alun de potassium, l'alun de sodium et le sulfate d'aluminium.

13. Méthode selon la revendication 1, dans laquelle ladite étape d'ajout a) ajoute un sel de fer à ladite pâte, ledit sel étant choisi dans le groupe comprenant le chlorure ferrique, le gluconate ferreux, le citrate d'ammonium ferrique, le pyrophosphate ferrique, le fumarate ferreux, le lactate ferreux et le sulfate ferreux.

14. Méthode selon la revendication 1, dans laquelle ladite étape d'ajout a) ajoute un ion cuivre à ladite pâte, ledit ion cuivre étant une partie d'un sel choisi dans le groupe comprenant le chlorure cuivrique, le gluconate cuivrique et le sulfate cuivrique.

15. Méthode selon la revendication 1, dans laquelle ladite étape de traitement thermique b) comprend la friture de ladite pâte.

16. Méthode selon la revendication 1, dans laquelle ladite étape de traitement thermique b) comprend la cuisson de ladite pâte.

17. Méthode selon la revendication 1, dans laquelle la chips est une chips de maïs.
